# EUROPÄISCHE PATENTSCHRIFT

(11) **EP 1 145 409 B1**
(45) Veröffentlichungstag und Bekanntmachung des Hinweises auf die Patenterteilung: **14.05.2003**
(21) Anmeldenummer: 00910641.0
(22) Anmeldetag: 04.02.2000
(51) Int. Cl.: H02K 1/32, H02K 1/28, H02K 1/30, H02K 9/06

(54) **ELEKTRISCHE MASCHINE MIT EINEM GEKÜHLTEN ROTOR**
ELECTRIC MACHINE WITH COOLED ROTOR
MACHINE ELECTRIQUE A ROTOR REFROIDI

(30) Priorität: 10.02.1999 DE 19905540
(43) Veröffentlichungstag der Anmeldung: 17.10.2001
(73) Patentinhaber: ZF FRIEDRICHSHAFEN Aktiengesellschaft, 88038 Friedrichshafen (DE)
(72) Erfinder: BACHMANN, Max, D-88339 Bad Waldsee (DE)
(86) Internationale Anmeldenummer: EP0000894
(87) Internationale Veröffentlichungsnummer: WO00048291

(56) Entgegenhaltungen:
- EP-A- 0 565 040
- DE-A- 4 311 242
- DE-C- 364 809
- US-A- 2 372 453
- PATENT ABSTRACTS OF JAPAN vol. 1999, no. 02, 26. Februar 1999 (1999-02-26) -& JP 10 309064 A (EBARA CORP), 17. November 1998 (1998-11-17)
- PATENT ABSTRACTS OF JAPAN vol. 010, no. 008 (E-373), 14. Januar 1986 (1986-01-14) -& JP 60 170441 A (TOSHIBA KK), 3. September 1985 (1985-09-03)

## Beschreibung

Die Erfindung betrifft eine elektrische Maschine insbesondere als Elektromotor zum Antreiben von Fahrzeugen nach dem Oberbegriff von Anspruch 1.

Derartige Maschinen sind häufig Asynchronmaschinen, die mit einem Stator und einem in dem Stator vorgesehenen Rotor ausgebildet sind. Der Rotor wird als Kurzschlußläufer ausgebildet und besteht vorzugsweise aus elektrisch leitfähigem Aluminium, das in Form eines Druckgusses zum Rotor geformt wird. Das Aluminium wird bei der Herstellung in die vom Blechpaket des Rotors gebildeten Nuten eingegossen und an den Stirnseiten des Rotors werden die Aluminiumstränge aus den jeweiligen Nuten zu einem Ring zusammengeschlossen und damit kurzgeschlossen (Kurzschlußkäfig). Die Asynchronmotoren sind vorwiegend hoch ausgenutzte Motoren, deren Wärmeentwicklung eine optimierte Kühlung verlangen.

Eine derartige elektrische Maschine ist beispielsweise aus der EP 0 484 548 B1 bekannt. Die verwendeten elektrischen Maschinen weisen einen innenliegenden Rotor mit Rotorwelle und Rotorblechpaket und einen außenliegenden Stator auf. Die elektrische Maschine ist mit dem Kühlkreislauf des Fahrzeuges verbunden.
Ein besonderes Problem bei der Kühlung derartiger elektrischer Maschinen besteht in der Lagerung der Rotorwelle und in deren Dichtungen. Die von der Rotorwelle auf die Lager übertragenen Temperaturen führen zu Beschädigungen an den Lagern und damit nach kurzer Zeit zum Ausfall der Maschine. Wegen hoher Temperaturen in der Motorwelle entstehen in der Lagerung hohe Differenztemperaturen zwischen Lagerinnenring und Lageraußenring.

Gleichzeitig ist der Transport eines Kühlmediums in der elektrischen Maschine durch die baulich bedingte räumliche Begrenzung erschwert, wodurch die anfallenden Temperaturen insbesondere bei hoch ausgenutzten Maschinen nur schwer aus der Maschine abgeführt werden können.

Aus der DE 43 11 242 A ist ein Verfahren zur Herstellung eines Rotors einer elektrischen Maschine bekannt geworden. Der Rotor besitzt eine Mittelnabe zur Befestigung auf einer Wellen sowie nicht sichelförmige Streben, durch welche die Mittelnabe mit einer Felge zur Aufnahme von elektrischen Wicklungen verbunden ist. Ebenfalls weist die US-Patentschrift US-A 2 372 453 eine elektrische Maschine auf mit einem hohl ausgebildeten Rotor mit nicht sichelförmigen Stegen, die das Wicklungspaket tragen. Aus den PATENT ABSTRACTS OF JAPAN vol. 1999, no. 02, 26. Februar 1999 (1999-02-26) -& JP 10 309064 (EBARA CORP), 17. November 1998 (1998-11-17) ist bekannt, einen hohlen Rotor einer elektrischen Maschine, der auf nicht sichelförmigen Stegen das Wicklungspaket trägt, von einem Kühlfluid durchströmen zu lassen. Schließlich ist aus der DE 364 809 C eine Nabe zum Tragen der wirksamen Eisenringe von großen, schnelllaufenden, elektrischen Wechselstrommaschinen bekannt, bei der die Nabe, auf die die Tragringe für die Magnetpole in üblicherweise aufgeschrumpft werden, mit freien, von der radialen Richtung abweisenden Armen versehen ist.

Der vorliegenden Erfindung liegt daher die Aufgabe zugrunde, eine elektrische Maschine aufzuzeigen, die Setzungen und Fertigungstoleranzen egalisiert.

Die Aufgabe wird gelöst durch die Erfindung mit den Merkmalen von Anspruch 1. Ausgestaltungen des erfinderischen Gedankens sind Gegenstand von Unteransprüchen.

Die von elektrischen Maschinen erzeugte Wärme muß zur Kühlung der Maschine an ein Kühlmedium abgegeben werden, daß mit der Maschine in Verbindung bringbar ist. Ein vorteilhaftes Kühlmedium stellt die Luft dar, die ihrerseits mit geeigneten Mitteln wieder rückgekühlt wird oder sich gegen andere Luft austauscht. Luft ist ein hervorragender Isolator, so daß in der elektrischen Maschine keine besonderen elektrischen Isolationen durchgeführt werden müssen, um die verschiedenen Bauteile der Maschine gegen Kurzschlußprobleme zu schützen, die im Zusammenhang mit dem Kühlmedium auftreten könnten. Um das Kühlmedium in der Maschine sicher zu führen, müssen mögliche Strömungshindernisse weitestgehend vermieden werden.

Erfindungsgemäß wird in einer elektrischen Maschine, die einen außenliegenden Stator und einem innenliegenden, drehbar gelagerten Rotor, ein Rotorblechpaket und eine mit dem Rotorblechpaket drehfest verbundene Rotorwelle aufweist, der Rotor hohl ausgebildet und in dem Bereich zwischen Rotorblechpaket und Rotorwelle ein Kühlmedium hindurch geführt. Dazu kann die Rotorwelle unmittelbar im Rotorblechpaket drehfest angeordnet sein oder es kann zwischen dem Rotorblechpaket und der Rotorwelle eine hohle Zwischenwelle vorgesehen sein, auf der das Rotorblechpaket angeordnet ist. Zur Bildung einer Rotorwelle, die viel Kühlmedium zwischen sich und der Zwischenwelle bzw. dem Rotorblechpaket vorbeiführen läßt und zur Bildung einer großen Wärmeübergangsfläche bei gleichzeitiger hoher Aufnahme von Spannungsenergie, ist die Rotorwelle in der Form von drei sichelförmigen Stegen ausgebildet.

In einer vorteilhaften Ausgestaltung stoßen die Rotorwelle und die hohle Zwischenwelle bzw. das Rotorblechpaket zur Bildung kleiner Wärmeübergangsflächen nur an nahezu linienförmigen Berührungflächen aneinander an.

In einer Ausgestaltung sind die Stege unterbrochen und liegen nicht auf ihrer gesamten Länge an der Hohlwelle an.

Fig.1 zeigt eine elektrische Maschine, welche kein Ausführungsbeispiel der Erfindung ist.

Die Erfindung wird anhand von Figuren näher beschrieben.

Es zeigen:
- Fig. 2: eine elektrische Maschine mit sichelförmiger Stegwelle und
- Fig. 3: einen Schnitt durch Stegwelle und Blechpaket nach Fig. 2.

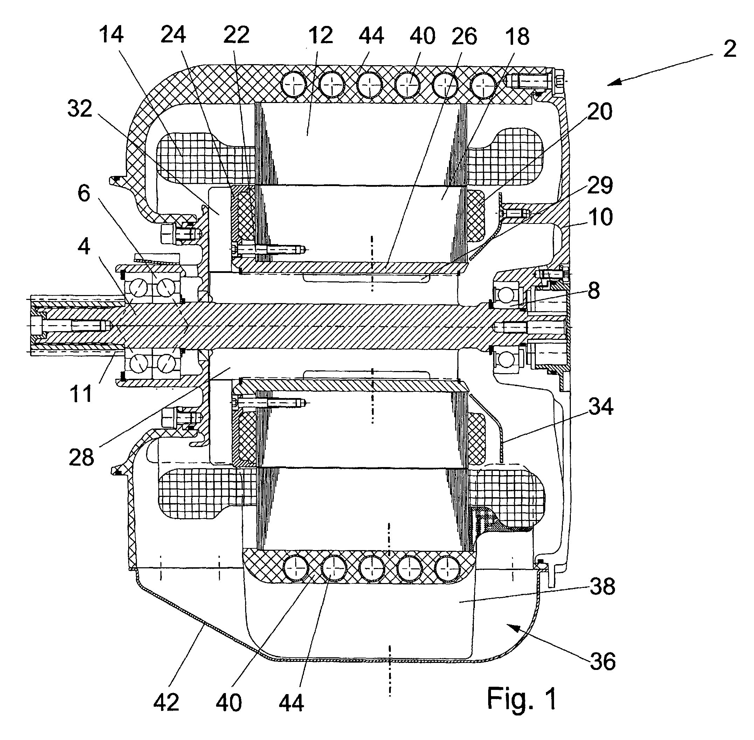

Die Fig. 1 zeigt eine elektrische Maschine 2 mit einer Rotorwelle 4, die in einer ersten Lagerung 6 und in einer zweiten Lagerung 8 drehbar in einem Gehäuse 10 gelagert ist. Die Rotorwelle 4 weist eine Verzahnung 11 auf, über die die elektrische Maschine 2 mit weiteren und hier nicht gezeigten Elementen des Antriebsstranges zusammenwirkt. In dem Gehäuse 10 ist ein Statorblechpaket 12 angeordnet, durch das die Statorwicklung 14 hindurchragt. Mit einem geringen Luftspalt beabstandet liegt radial innerhalb des Statorblechpakets 12 ein Rotorblechpaket 18, das von Metallstäben 20, vorzugsweise aus Aluminium durchdrungen wird. Eine Kappe 24 ist an dem Rotorblechpaket 18 mit Verschraubungen 22 befestigt. Alternativ können die Metallstäbe 20 auch in das Rotorblechpaket 18 in einem Druckgußverfahren eingepreßt werden. Das Rotorblechpaket 18 sitzt auf einer runden, hohlen Zwischenwelle 26 auf. Innerhalb der Zwischenwelle 26 ist die Rotorwelle 4 drehfest angeordnet, beispielsweise mit Preßsitz eingepreßt. Die Rotorwelle 4 kann jedoch unmittelbar in das Rotorblechpaket 18 eingepreßt sein. Die Rotorwelle 4 weist Stege 28 auf. Die Stege 28 weisen in der hier gezeigten Anordnung Aussparungen 29 auf, so daß die Stege 28 nicht auf ihrer vollen Länge an der Innenwand der hohlen Zwischenwelle 26 anliegen. In den Zwischenräumen zwischen den Stegen 28 kann ein erstes Kühlmedium, vorzugsweise Luft, durch die Zwischenwelle 26 bzw. das Rotorblechpaket 18 gefördert werden. Dazu ist an einem axialen Ende des Rotorblechpaketes 18 ein Lüfterrad 32 angeordnet, das eine Strömung des Kühlmediums hervorruft. An dem anderen axialen Ende des Rotorblechpaketes 18 ist ein Blechring 34 vorgesehen, der das durch einen Wärmetauscher 36 strömende Kühlmedium drallfrei in Richtung auf die Rotorwelle 4 leitet. Der Wärmetauscher 36 weist Kühlrippen 38 auf, die das Kühlmedium durchströmt und die in der hier gezeigten Ausgestaltung von dem Gehäuseteil 40 gebildet werden. Die Kühlrippen 38 sind nach außen von einem Deckel 42 begrenzt, der an das Gehäuseteil 40 angeschraubt ist.
In dem Gehäuseteil 40 sind Kühlrohre 44 vorgesehen, durch die ein zweites Kühlmedium strömt. Die vom ersten Kühlmedium im Wärmetauscher 36 über die Kühlrippen 38 auf die Kühlrohre 44 übertragene Wärme wird vom zweiten Kühlmedium von der elektrischen Maschine 2 wegtransportiert. Gleichzeitig kann vom Statorblechpaket 12 Wärme auf die Kühlrohre 44 übertragen werden, wodurch eine Kühlung des Statorblechpaketes 12 erfolgt.

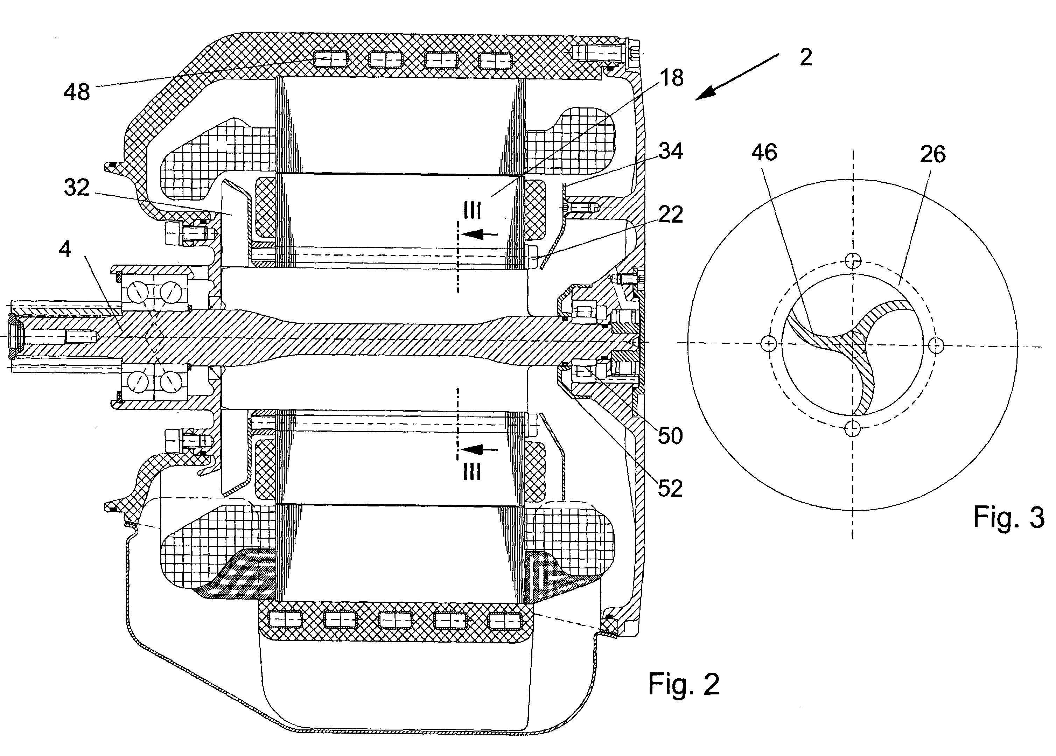

In der in Fig. 2 gezeigten Anordnung weist die elektrische Maschine 2 eine Rotorwelle 4 auf, die drei sichelförmig gebogene Stege 46 besitzt (siehe Fig. 3). Die sichelförmig geschwungene Form der Stege 46 erlaubt ein hohes Arbeitsvermögen bezüglich der aufzunehmenden Spannungsenergie beim Einpreßvorgang der Stegwelle 4 in das Blechpaket 18. Dabei können Setzungen und Fertigungstoleranzen egalisiert bzw. aufgefangen werden.
Die Kühlrohre 48 sind in der hier gezeigten Ausführungsform mit einem rechtwinkligen Querschnitt versehen. Die Lagerung 50, die hier als Rollenlager ausgeführt ist, weist hinter einer Kappe 52 ein Fettdepot auf.

Rotor und Stator können in kompakter Bauweise ausgeführt werden und damit eine hohe Ausnutzung der Maschine erreicht werden. Die elektrischen Leistungsdaten des Rotors werden in der erfindungsgemäßen Maschine nicht beeinflußt. Die Luftansaugung in der Nähe der Wellenmitte ist für die Druckerzeugung der Lüftung von Vorteil.

### Bezugszeichen

- 2: elektrische Maschine
- 4: Rotorwelle
- 6: Lagerung
- 8: Lagerung
- 10: Gehäuse
- 11: Verzahnung
- 12: Statorblechpaket
- 14: Statorwicklung
- 18: Rotorblechpaket
- 20: Metallstab
- 22: Verschraubung
- 24: Kappe
- 26: Zwischenwelle
- 28: Steg
- 29: Aussparung
- 32: Lüfterrad
- 34: Blechring
- 36: Wärmetauscher
- 38: Kühlrippe
- 40: Gehäuseteil
- 42: Deckel
- 44: Kühlrohr
- 46: Steg
- 48: Kühlrohr
- 50: Lagerung
- 52: Kappe

## Patentansprüche

1. Elektrische Maschine (2) mit einem außenliegenden Stator und einem innenliegenden, drehbar gelagerten Rotor, der ein Rotorblechpaket (18) und eine mit dem Rotorblechpaket (18) drehfest verbundene Rotorwelle (4) aufweist und der hohl ausgebildet ist oder zwischen dem Rotorblechpaket (18) und der Rotorwelle (4) eine hohle Zwischenwelle aufweist, auf der das Rotorblechpaket (18) angeordnet ist, **dadurch gekennzeichnet, daß** zur Bildung einer Rotorwelle (4), die viel Kühlmedium zwischen sich und der Zwischenwelle bzw. dem Rotorblechpaket (18) vorbeiführen läßt und zur Bildung einer großen Wärmeübergangsfläche bei gleichzeitiger hoher Aufnahme von Spannungsenergie bei der Einbringung der Rotorwelle (4) in das Rotorblechpaket (18) oder die Zwischenwelle , die Rotorwelle (4) in der Form von drei sichelförmigen Stegen (46) ausgebildet ist.

2. Elektrische Maschine (2) nach Anspruch 1, **dadurch gekennzeichnet, daß** die Rotorwelle (2) und die hohle Zwischenwelle bzw. das Rotorblechpaket (18) zur Bildung kleiner Wärmeübergangsflächen nur an nahezu linienförmigen Berührungflächen aneinander anstoßen.

3. Elektrische Maschine (2) nach einem der Ansprüche 1 oder 2, **dadurch gekennzeichnet, daß** die Stege unterbrochen sind und nicht auf ihrer gesamten Länge an der Zwischenwelle bzw. dem Rotorblechpaket (18) anliegen.

4. Elektrische Maschine (2) nach einem der Ansprüche 1 bis 3, **dadurch gekennzeichnet, daß** die Rotorwelle (4) als separates Gesenkschmiedeteil oder Feingußteil gefertigt ist und in die hohle Zwischenwelle bzw. das Rotorblechpaket (18) zur Erreichung eines Preßsitzes eingepreßt ist.

5. Elektrische Maschine (2) nach einem der Ansprüche 1 bis 4, **dadurch gekennzeichnet, daß** die Rotorwelle (4) aus einem schlecht wärmeleitenden Material hergestellt ist.

6. Elektrische Maschine (2) nach Anspruch 5, **dadurch gekennzeichnet, daß** das schlecht wärmeleitende Material ein hochlegierter Stahl ist.

7. Elektrische Maschine (2) nach Anspruch 5, **dadurch gekennzeichnet, daß** das schlecht wärmeleitende Material Titan ist.

8. Elektrische Maschine (2) nach einem der Ansprüche 1 bis 7, **dadurch gekennzeichnet, daß** Elemente (34) zur Unterstützung einer drallfreien Führung des Kühlmediums vorgesehen sind.

9. Elektrische Maschine (2) nach einem der Ansprüche 1 bis 8, **dadurch gekennzeichnet, daß** das Kühlmedium Luft ist.

## Claims

1. Electric machine (2) with external stator and internal, bearing-supported rotor, which is provided with a laminated core (18) and a rotor shaft (4) nonrotationally connected to the laminated core (18), and which is hollow or which between the laminated core (18) and the rotor shaft (4) features a hollow intermediate shaft on which the laminated core (18) is arranged, **characterized in that** the rotor shaft (4) has the form of three crescent-shaped webs (46) for a rotor shaft to be formed that lets ample cooling medium pass between itself and the intermediate shaft or the laminated core (18) and for a large heat transfer area to be formed with simultaneously high absorption of potential energy during placement of the rotor shaft (26) in the laminated core (18) or the intermediate shaft.

2. Electric machine (2) according to claim 1, **characterized in that** rotor shaft (2) and hollow intermediate shaft or the laminated core (18) abut on nearly linear-shaped contact areas for small heat transfer areas to be formed.

3. Electric machine (2) according to one of the claims 1 or 2, **characterized in that** the webs are interrupted and do not abut over their entire length on the intermediate shaft or the laminated core (18).

4. Electric machine (2) according to one of the claims 1 to 3, **characterized in that** the rotor shaft is made as a separate drop-forged or precision-cast part and is press-fitted into the hollow intermediate shaft or the laminated core (18).

5. Electric machine (2) according to one of the claims 1 to 4, **characterized in that** the rotor shaft is made of a material of poor thermal conductivity.

6. Electric machine (2) according to claim 5, **characterized in that** the material of poor thermal conductivity is high-alloyed steel.

7. Electric machine (2) according to claim 5, **characterized in that** the material of poor thermal conductivity is titanium.

8. Electric machine (2) according to one of the claims 1 to 7, **characterized in that** elements are provided to support swirl-free flow of the cooling medium.

9. Electric machine (2) according to one of the claims 1 to 8, **characterized in that** the cooling medium is air.

## Revendications

1. Machine électrique (2) dotée d'un stator extérieur et d'un rotor intérieur pivotant, celui-ci comportant un noyau feuilleté (18) et un arbre (4) relié de façon solidaire en rotation avec le noyau feuilleté (18) et étant creux, ou comportant entre le noyau feuilleté du rotor (18) et l'arbre du rotor (4) un arbre intermédiaire creux sur lequel est disposé le noyau feuilleté du rotor (18), **caractérisée en ce que** l'arbre de rotor (4) est réalisé en trois nervures en forme de croissant (46), afin de disposer d'un arbre de rotor (4) laissant s'écouler une quantité importante d'un agent réfrigérant entre l'arbre de rotor lui-même et l'arbre intermédiaire ou le noyau feuilleté du rotor (18) et afin de former une grande surface de transition de chaleur assurant, en même temps, l'absorption d'une quantité importante d'énergie potentielle lors de l'introduction de l'arbre de rotor (4) dans le noyau feuilleté (18) ou l'arbre intermédiaire.

2. Machine électrique (2) selon la revendication 1, **caractérisé en ce que** l'arbre de rotor (2) et l'arbre intermédiaire creux ou le noyau feuilleté (18) ne se touchent - pour la formation de petites surfaces de transition de chaleur - presque qu'au niveau de zones de contact linéaires.

3. Machine électrique (2) selon une des revendications 1 ou 2, **caractérisée en ce que** les nervures sont interrompues et **en ce qu'**elles ne plaquent pas, sur toute leur longueur, contre l'arbre intermédiaire ou le noyau feuilleté du rotor (18).

4. Machine électrique (2) selon une des revendications 1 à 3, **caractérisée en ce que** l'arbre de rotor est réalisé comme pièce matricée séparée ou pièce coulée de précision et **en ce que** l'arbre intermédiaire creux ou le noyau feuilleté du rotor (18) sont enfoncés afin d'obtenir un ajustement serré.

5. Machine électrique (2) selon une des revendications 1 à 4, **caractérisée en ce que** l'arbre de rotor est fabriqué d'un matériau à basse conductibilité thermique.

6. Machine électrique (2) selon la revendication 5, **caractérisée en ce que** le matériau à basse conductibilité thermique est un acier fortement allié.

7. Machine électrique (2) selon la revendication 5, **caractérisée en ce que** le matériau à basse conductibilité thermique est du titane.

8. Machine électrique (2) selon une des revendications 1 à 7, **caractérisée en ce que** sont prévus des éléments pour supporter un écoulement équilibré de l'agent réfrigérant.

9. Machine électrique (2) selon une des revendications 1 à 8, **caractérisée en ce que** l'agent réfrigérant est de l'air.
